# EUROPEAN PATENT APPLICATION

(11) **EP 3 573 202 A1**
(43) Date of publication of application: **27.11.2019**
(21) Application number: 18197647.3
(22) Date of filing: 28.09.2018
(51) Int. Cl.: H02G 3/04, H02G 3/06, H02G 3/00

(54) **CABLE COLLECTING DEVICE, CABLE GUIDING DEVICE AND BUILDING COMPONENT**

(30) Priority: 24.05.2018 CN 201810510868
(71) Applicant: Beijing Apollo Ding Rong Solar Technology Co. Ltd., Beijing 100176 (CN)
(72) Inventor: CAO, Zhifeng, BEIJING, 100176 (CN); DAI, Fengyu, BEIJING, 100176 (CN); WANG, Tao, BEIJING, 100176 (CN)
(74) Representative: Cabinet Beau de Loménie

(57) **Abstract**

A cable collecting device of the present disclosure comprises a frame (1), a cover plate (2) and an elastic pad (3). The frame (1) has a bottom plate (11) and a side plate (12). The side plate (12) is provided with a through hole (121) for the cable (72) to pass through. The cover plate (2) covers the frame (1) and detachably connected to the frame. The elastic pad (3) is connected to a surface of the bottom plate (11) away from the side plate (12).

## Description

### TECHNICAL FIELD

The present disclosure relates to the field of photovoltaic technology, and in particular to a cable collecting device, a cable guiding device and a building component.

### BACKGROUND

At present, solar energy is used in more and more applications as a clean energy, and a photovoltaic module is an important component for solar power generation. Photovoltaic modules are installed on the roof of many buildings, and form rooftop or roof power generation systems in combination with certain lines and electronic components, so as to provide electricity for buildings.

In the prior art, the photovoltaic module has a junction box and a cable to form an electric circuit, however, the junction box and the cable are usually directly exposed to the outside, which lack effective protection. Thus, they are prone to failure due to sun exposure, rain and the like, thereby reducing service life. The flexible photovoltaic roof has limited pressure bearing capacity, and thus it is difficult to fix a cable frame. At the same time, since a plurality of photovoltaic modules are mounted on the rooftop, there are a larger number of cables without effective guided and carded, which may easily block photovoltaic modules, reduce light reception and affect the power generation effect.

It should be noted that the information disclosed in the background section above is only intended to further understand the background of the present disclosure, and thus may comprise information that does not constitute prior art known to those skilled in the art.

### SUMMARY

An objective of the present disclosure is to provide a cable collecting device which may guide and protect a cable of a photovoltaic module to extend its service life. The present disclosure further provides a cable guiding device including the above mentioned cable collecting device and a building component including the above mentioned cable guiding device.

According to an aspect of the present disclosure, a cable collecting device is provided, which comprises: a frame having a bottom plate and a side plate, the side plate being provided with a through hole for the cable to pass through; a cover plate covering the frame and detachably connected to the frame; and an elastic pad connected to a surface of the bottom plate away from the side plate.

In an exemplary embodiment of the present disclosure, the cable collecting device further comprise: a base, connected between the bottom plate and the elastic pad.

In an exemplary embodiment of the present disclosure, the elastic pad is adhered to the surface of the bottom plate away from the side plate and connected.

In an exemplary embodiment of the present disclosure, an adhesive layer is provided on a surface of the elastic pad away from the bottom plate.

In an exemplary embodiment of the present disclosure, the bottom plate is provided with a permeable hole.

In an exemplary embodiment of the present disclosure, a washer is provided inside the through hole.

In an exemplary embodiment of the present disclosure, at least one side of the frame is provided with a shielding part which is connected with the side plate or the cover plate.

In an exemplary embodiment of the present disclosure, the side plate is provided with an outwardly extending connector, and the cover plate is connected with the connector.

In an exemplary embodiment of the present disclosure, at least one of the frame and the cover plate is made of an aluminum plate or an aluminum-coated and zinc-coated steel plate.

According to a further aspect of the present disclosure, a cable guiding device is provided, which comprises a plurality of cable collecting devices according to any of the above embodiments. Two adjacent cable collecting devices are communicated and connected with each other.

In an exemplary embodiment of the present disclosure, frame bodies of two adjacent cable collecting devices are detachably connected by a fitting.

In an exemplary embodiment of the present disclosure, the fitting is flat plate structure, one end of which is fixedly connected to the side plate of the frame by a bolt.

In an exemplary embodiment of the present disclosure, the fitting comprises two snap holes, and the side plate is provided with flanges, which are snap-fitted into the corresponding snap holes.

In the cable collecting device, the cable guiding device and the building component of the present disclosure, the cable of the photovoltaic module may penetrate into the frame via the trough hole and the cable may extend along the frame, so that the cable is guided to prevent the cable from blocking the photovoltaic module; a pressure on the mounting surface caused by the frame and the base is dispersed by the elastic pad, so as to reduce damage on the mounting surface due to the stress; at the same time, the frame and the cover plate covering thereon may protect the cable to avoid the cable from being exposed to the outside and to prolong service life.

In addition, the washer inside the through hole may prevent scratches on the surface of the cable. The elastic pad is adhered to the roof or other mounting surfaces using the adhesive layer without causing mechanical damage to the roof. The base may raise the frame, so that a space for draining is formed between the frame and the mounting surface. The permeable hole may prevent water from accumulating inside the frame. The shielding part may shield the junction box and the cable of the photovoltaic module to be protected.

It should be understood that the above general description and the following detailed description are intended to be illustrative and not restrictive of the present disclosure.

### BRIEF DESCRIPTION OF THE DRAWINGS

The accompanying drawings, which are incorporated in the specification and constitute part of the present specification, show embodiments in accordance with the present disclosure, and explain principle of the present disclosure together with this specification. It is obvious for those ordinary skill in the art that the accompanying drawings in the following description are merely some embodiments of the present disclosure, and other drawings may also be obtained by these drawings without any creative work.
FIG. 1 is an exploded view of the cable collecting device of an embodiment of the present disclosure.
FIG. 2 is an assembly drawing of the cable collecting device and the photovoltaic module of an embodiment of the present disclosure.

In the drawings: 1. frame; 11. bottom plate; 111. permeable hole; 12. side plate; 121. through hole; 122. washer; 123. connector; 2. cover plate; 3. elastic pad; 4. base; 5. shielding part; 6. fitting; 7. photovoltaic module; 71. junction box; 72. cable.

### DETAILED DESCRIPTION

Exemplary embodiments will now be described more fully with reference to the accompanying drawings. However, exemplary embodiments can be embodied in a variety of forms, and should not be construed as being limited to the embodiments set forth herein. Rather, these exemplary embodiments are provided to enable the present disclosure thorough and complete. Conceptions of exemplary embodiments will be fully given to those skilled in the art. The drawings are only schematic representations of the disclosure, and are not necessarily to scale. The same reference numerals in the drawings denote the same or similar structures, and thus their detailed description will be omitted.

Relative terms such as "on" and "under" are used in the specification to describe relative relationship of one component with respect to another component in the drawings, however, these terms are used in this specification for convenience only, for example, the direction shown in the drawings. It should be understood that, a component located "on" as described will become a component located "under" if the device is turned upside down. When a structure is located "on" other structures, it is possible that a structure is integrally formed on other structures or that a structure is "directly" disposed on other structures, or that a structure is "indirectly" disposed on other structures by another structure.

The terms "a" "an", "the", "said" and "at least one" are used to denote that there are one or more elements/components and the like; the terms "comprise" and "have" are used to denote the meaning of "openly comprise" and it means that there also are other elements/components and the like in addition to the listed elements/components and the like; the terms "first", "second" and the like are only used as marks without limiting the number of objects.

In the related art, the photovoltaic module is mounted to the roof of a building, so that a rooftop power generation system is formed to provide power to the building. A plurality of photovoltaic modules are provided and distributed in an array. Each of photovoltaic modules has a junction box and a cable. The junction box and the cable are usually directly exposed to the outside, which leads to a lack of effective protection. Thus, they are prone to failure due to sun exposure, rain and the like, thereby reducing service life. At the same time, there are a larger number of cables without effective guided and carded, which may easily block photovoltaic modules, reduce light reception and affect the power generation effect. In addition, with respect to the flexible photovoltaic roof, it has limited pressure bearing capacity due to the flexible material on its layer, so that it is difficult to install and the roof is easy to be damaged when directly fixing the photovoltaic module on the film material.

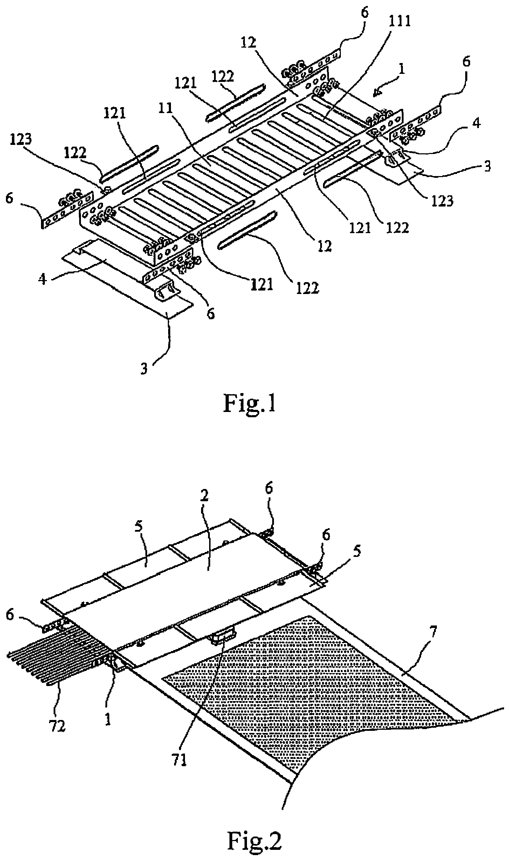

An embodiment of the present disclosure provides a cable collecting device for guiding and protecting a cable of a photovoltaic module (but not limited thereto), and for guiding and protecting the cable of other devices. In the embodiment of the present disclosure, the photovoltaic module is only taken as an example. As shown in FIG. 1 and FIG. 2, the cable collecting device of the photovoltaic module of the embodiment of the present disclosure may comprise a frame 1, a cover plate 2 and an elastic pad 3.

The frame 1 may have a bottom plate 11 and a side plate 12, and the side plate 12 is provided with a through hole 121 for the cable to pass through. The cover plate 2 may cover the frame 1 and may be detachably connected with the frame 1.

With respect to the cable collecting device of the embodiment of the present disclosure, the frame 1 may be fixed to a roof or other mounting surfaces to cover the frame 1 via the cover plate 2. The cable of the photovoltaic module may penetrate into the frame 1 via the trough hole 121 and may extend along the frame 1, so that the cable may be guided and protected by the frame 1 and the cover plate 2 to avoid the cable from being exposed to the outside and to prolong service life.

Various components of the cable collecting device of the present disclosure will be described in detail below:

As shown in FIG. 1, in an embodiment, the frame 1 may be a through slot-like structure, and has a length that is the same as a width of the photovoltaic module. Of course, the length of the frame 1 may also be lower than or higher than the width of the photovoltaic module. At the same time, the frame 1 may comprise a bottom plate 11 and a side plate 12.

The bottom plate 11 may be a flat plate and may be rectangular in shape, and may be fixed to a mounting surface by adhering or by means of screw connection. The mounting surface may be a roof of the rooftop or other surfaces on which the photovoltaic module is required to be installed.

The number of side plates 12 is two. The two side plates 12 are respectively provided at both sides of the bottom plate 11 and may form an integrated structure together with the bottom plate 11, or they are separate components connected each other. Two side plates 12 are oppositely arranged and parallel to each other with a space therebetween to accommodate the cable of the photovoltaic module.

At least one of two side plates 12 is provided with a through hole 121. The cable of the photovoltaic module may penetrate through the side plate 12 via the through hole 121 to enter the frame 1. The shape of the through hole 121 may be circular, rectangular, oval-shaped and the like, and is not particularly limited herein. The number of through holes 121 on the side plate 12 may be one, two or more. In addition, a washer 122 may be provided inside the through hole 121 and the washer 122 may be snap-fitted inside the through hole 121, so as to prevent the cable from being scratched by an edge of the through hole 121. The material of the washer 122 may be rubber or other flexible materials, as long as it can be used to protect the cable.

For example, the frame 1 may comprise bottom plate 11 and two side plates 12 arranged to be opposite and parallel to each other, and the side plate 12 is integrally formed with the bottom plate 11. Two oval-shaped through holes 121 are provided on each of two side plates 12 to form a symmetrical arrangement about a central axis of the bottom plate 11. One washer 122 is provided inside each of through holes 121.

As shown FIG. 2, in an embodiment, the cover plate 2 may be a flat plate structure, which may be connected to these two side plates 12 at the edges of side plate and is parallel to the bottom plate 11, so that the frame 1 is covered by the cover plate 2 to protect the cable inside the frame 1. At the same time, the cover plate 2 is connected with the side plate 12 in a detachable way.

For example, an outer side surface of the side plate 12 may be provided with an outwardly extending connector 123. The connector 123 may be parallel to the bottom plate 11. The cover plate 2 may contact the connector 123 and may be detachably fixed to the connector 123 by bolts. Of course, in other embodiment of the present disclosure, the cover plate 2 may be fixed on the frame 1 by snap-fitting or other detachable ways, which will not be enumerated herein.

As shown in FIG. 1, in an embodiment, material of the elastic pad 3 may be rubber or other elastic materials. An adhesive layer may be provided on a surface of the elastic pad 3 away from the bottom plate 11 and may be adhered to the mounting surface. The adhesive layer may be formed by applying an adhesive, which may be epoxy resin adhesive and the like. The adhesive layer may also be formed by an adhesive tape, which may be an acrylic tape or the like. Of course, the elastic pad 3 may be fixed on the mounting surface in other ways. For example, a special frame is fixed on the mounting surface, and then the elastic pad 3 is embedded into the frame, which will not be enumerated herein.

The surface of the bottom plate 11 away from the side plate 12 may be connected with the elastic pad 3, and, for example, may be directly adhered to the surface of the bottom plate 11 of the frame 1 away from the side plate 12, and may be connected by adhering or by means of screw connection. Alternatively, the elastic pad 3 is connected with the bottom plate 11 by the base 4 located therebetween. Thus, the stress in the mounting surface may be dispersed by the elastic pad 3 to reduce damage on the mounting surface caused by the base 4, and it is advantageous to prevent the roof or the elastic pad 3 from damage by means of adhering and fixing of the adhesive layer. For example, the elastic pad 3 may disperse the stress in a roof and reduce damage of the roof caused by the base 4 when the mounting surface is the roof.

As shown in FIG. 1, in an embodiment, the above mentioned base 4 may be provided to the surface of the bottom plate 11 away from the side plate 12, and may be fixedly connected with the mounting surface, so that the frame 1 is arranged to form a space for draining between the frame 1 and the mounting surface, so as to ensure normal draining of the mounting surface. At the same time, one or more permeable holes 111 are provided on the bottom plate 11 and the shape of each of permeable holes 111 may be rectangular, circular, oval-shaped and the like. Water within the frame 1 may be discharged by the permeable hole 111, so as to prevent water from accumulating inside the frame 1. Of course, in other embodiment of the present disclosure, the base 4 and the frame 1 may also be an integrated structure.

For example, the number of the base 4 is two. These two bases 4 may be fixed on the mounting surface for example by adhering, and the bottom plate 11 may be fixed on two bases 4 by such as welding or screw connection. The shape of permeable hole 111 is oval-shaped and the number thereof is plural. Each of permeable holes 111 may be arranged side by side along a longitudinal direction of the bottom plate 11. The number of elastic pad 3 may be the same as that of the base 4. The base 4 may be fixed on the elastic pad 3 by bolts or other connecting structures. Two elastic pads 3 may be adhered to the mounting surface by an adhesive and two bases 4 may be respectively fixed on the two elastic pads 3 by self-tapping screws. The thickness of the elastic pad 3 is larger than the length of the self-tapping screw. In other embodiment of the present disclosure, the base 4 may be fixedly connected with the elastic pad 3 by adhering or snap-fitting, for example, which will not be enumerated herein.

As shown FIG. 2, the cable collecting device of the present disclosure may further comprise a shielding part 5, which may be a flat plate structure and may be provided to at least one side of the frame 1. The shielding part 5 may extend towards a direction away from the side plate 12 and may be parallel to the bottom plate 11. The shielding part 5 may be connected with the side plate 12 or the cover plate 2. For example, the shielding part 5 may be fixed to the side plate 12 or the cover plate 2 by connecting parts such as bolts. Alternatively, the shielding part 5 may form an integrated structure together with the side plate 12 or the cover plate 2. The space between the shielding part 5 and the mounting surface may accommodate a junction box and a cable of the photovoltaic module, so that the junction box and the cable are shielded by the shielding part 5 to be protected. At the same time, the shielding part 5 may be a reflective structure to prevent from sunlight exposure. For example, material of the shielding part 5 is a reflective material or a surface of the shielding part 5 away from the bottom plate 11 is coated with a coating made of a reflective material.

For example, the number of the shielding parts 5 is two. These two shielding parts 5 are respectively provided at both sides of the frame 1, and each thereof forms an integrated structure with the cover plate 2 and is parallel to the bottom plate 11. When the photovoltaic module is installed on both sides of the frame 1, the junction box and the cable of the photovoltaic module at both sides may be shielded under two shielding parts 5 to be protected.

An embodiment of the present disclosure provides a cable guiding device, which may comprise a plurality of cable collecting devices according to any of the above mentioned embodiments. Two adjacent cable collecting devices are communicated and connected with each other.

The plurality of cable collecting devices may be fixed on the mounting surface and arranged in at least one row, and two adjacent cable collecting devices in the same row are communicated and connected with each other to form a passage for the cable to extend through. The frame bodies 1 of two adjacent cable collecting devices in the same row are detachably connected by a fitting 6.

For example, the fitting 6 may be a flat plate structure, one end of which may be fixedly connected with the side plate 12 of one of frame bodies 1 by a bolt and another end of which may be fixedly connected with the side plate 12 of another adjacent frame 1 by a bolt. Both ends of the same side plate 12 may be connected with the corresponding adjacent side plate 12 by a fitting 6. Thus, each photovoltaic module may correspond to the frame 1 of one cable collecting device. The cable of the photovoltaic module may enter the corresponding frame 1 via the trough hole 121 and extend along the passage formed by cable collecting devices in the same column, so as to protect the cable of the photovoltaic module on the mounting surface.

In other embodiment of the present disclosure, the fitting 6 may comprise two snap holes and a flange is provided on each of two side plates 12. The flange of the side plate 12 is snap-fitted into the corresponding snap hole. Alternatively, the fitting 6 may comprise a connecting plate fixed on two side plates 12 to be connected, and two connecting plates are adhered and connected by bolts. Of course, the fitting 6 may be other structures, which will not be enumerated herein.

An embodiment of the present disclosure further provides a building component. As shown FIG. 2, the building component may comprise a photovoltaic module 7 and the above mentioned cable guiding device.

The photovoltaic module 7 is provided as plural and is laid on a mounting surface and fixed. Each photovoltaic module 7 has a junction box 71 and a cable 72.

A cable guiding device may be fixed on the mounting surface with a specific fixing method with reference to the embodiment of the above mentioned cable collecting device, which will not be described in detail herein. At least one side of each cable collecting device may be provided with a photovoltaic module 7. The cable 72 of the photovoltaic module 7 located at a side of the cable collecting device may enter the frame 1 of the cable collecting device via the trough hole 121 and may extend along a passage formed by the cable collecting device in the same column, so that the cable 72 of the photovoltaic module 7 in each column is guided and protected.

A width of the photovoltaic module 7 may be the same as a length of the frame 1, so that the frame 1 may be arranged to be flush with the side edge of the photovoltaic module 7. Each photovoltaic module 7 corresponds to one frame 1.

With respect to the cable collecting device having the shielding part 5, the junction box 71 may be located under the shielding part 5, i.e. between a roof and the shielding part 5, so as to shield the junction box 71 and a portion of the cable 72 that connects the junction box 71 and to protect them.

The above mentioned building component may be a rooftop structure of a building. Accordingly, the mounting surface is a roof of the rooftop structure. Of course, In other embodiment of the present disclosure, the building component may also be a facade structure of the building, and the mounting surface may be a facade. There is no special limitation on the application of building components.

Other embodiments of the present disclosure will be apparent to those skilled in the art when considering the specification and implementing the present disclosure. The present application is intended to cover any variations, uses, or adaptations of the present disclosure, which are in accordance with the general principles of the present disclosure and comprise common general knowledge or conventional technical means in the art that are not disclosed in the present disclosure. The specification and examples are to be regarded as illustrative only, and the true scope and spirit of the present disclosure is defined by the appended claims.

## Claims

1. A cable collecting device, comprising:
a frame (1), having a bottom plate (11) and a side plate (12), wherein the side plate (12) is provided with a through hole (121) for the cable (72) to pass through;
a cover plate (2), covering the frame (1) and detachably connected to the frame (1); and
an elastic pad (3), connected to a surface of the bottom plate (11) away from the side plate.

2. The cable collecting device according to claim 1, wherein the cable collecting device further comprise:
a base (4), connected between the bottom plate (11) and the elastic pad (3).

3. The cable collecting device according to claim 1, wherein the elastic pad (3) is adhered to the surface of the bottom plate (11) away from the side plate and connected.

4. The cable collecting device according to anyone of claims 1 to 3, wherein an adhesive layer is provided on a surface of the elastic pad (3) away from the bottom plate (11).

5. The cable collecting device according to anyone of claims 1 to 4, wherein the bottom plate (11) is provided with a permeable hole (111).

6. The cable collecting device according to anyone of claims 1 to 5, a washer is provided inside the through hole (121).

7. The cable collecting device according to anyone of claims 1 to 6, at least one side of the frame (1) is provided with a shielding part (5) which is connected with the side plate (12) or the cover plate (2).

8. The cable collecting device according to anyone of claims 1 to 7, the side plate (12) is provided with an outwardly extending connector (123), and the cover plate (2) is connected with the connector (123).

9. The cable collecting device according to anyone of claims 1 to 8, wherein at least one of the frame (1) and the cover plate (2) is made of an aluminum plate or an aluminum-coated and zinc-coated steel plate.

10. A cable guiding device comprising the cable collecting device according to anyone of claims 1 to 9, wherein two adjacent cable collecting devices are communicated and connected with each other.

11. The cable guiding device according to claim 10, wherein frame bodies (1) of two adjacent cable collecting devices are detachably connected by a fitting (6).

12. The cable guiding device according to claim 11, wherein the fitting (6) is flat plate structure, one end of which is fixedly connected to the side plate of the frame (1) by a bolt.

13. The cable guiding device according to claim 12, wherein the fitting (6) comprises two snap holes, and the side plate (12) is provided with flanges, which are snap-fitted into the corresponding snap holes.
